# FASCICULE DE BREVET EUROPEEN

(11) **EP 4 452 904 B1**
(45) Date de publication et mention de la délivrance du brevet: **04.02.2026**
(21) Numéro de dépôt: 22850588.9
(22) Date de dépôt: 19.12.2022
(51) Int. Cl.: C04B 41/52, C04B 41/00, C04B 41/89, F01D 5/28, F01D 11/12

(54) **PIECE EN MATERIAU COMPOSITE A FLUAGE CONTROLE**
TEIL AUS VERBUNDWERKSTOFF MIT GESTEUERTER KRIECHDEHNUNG
PART MADE OF COMPOSITE MATERIAL, HAVING CONTROLLED CREEP

(30) Priorité: 23.12.2021 FR 2114311
(43) Date de publication de la demande: 30.10.2024
(73) Titulaire: Safran Ceramics, 33185 Le Haillan (FR)
(72) Inventeur: VANDELLOS, Thomas, 77550 MOISSY-CRAMAYEL (FR); ARNAL, Simon, 77550 MOISSY-CRAMAYEL (FR); BOUILLON, Eric, 77550 MOISSY-CRAMAYEL (FR); QUEMERAS, Lallie, Claudie, Régine, 77550 MOISSY-CRAMAYEL (FR)
(74) Mandataire: Cabinet Beau de Loménie
(86) Numéro de dépôt international: PCT/FR2022/052413
(87) Numéro de publication internationale: WO 2023/118712

(56) Documents cités:
- US-A1- 2018 022 649

## Description

### Domaine Technique

L'invention concerne le domaine des matériaux composites et plus précisément celui des revêtements appliqués à de tels matériaux pour augmenter leurs durées de vie dans des conditions exigeantes.

### Technique antérieure

Les matériaux composites présentent un très bon compromis entre leur poids et leurs propriétés mécaniques en plus d'une très bonne résistance à la température. Ces propriétés en font d'excellents candidats pour remplacer des matériaux métalliques dans certaines applications aéronautiques et en particulier pour les turbomachines.

Toutefois, ces matériaux sont susceptibles d'être détériorés s'ils sont placés directement dans un environnement trop agressif, comme par exemple la partie chaude d'une turbomachine aéronautique.

C'est pourquoi ils sont généralement revêtus d'une barrière environnementale et/ou d'une barrière thermique qui leur permet de supporter des températures élevées ou un environnement oxydant. Le substrat est généralement revêtu d'une couche d'accrochage favorisant l'accroche de la barrière environnementale et/ou thermique sur le matériau composite.

Par exemple, dans le cas d'une pièce de turbine, la pièce peut être revêtue d'une barrière environnementale elle-même revêtue d'une couche abradable.

US2018/022649A1 décrit une couche de revêtement bouclier thermique sur un substrat constitué d'un composite à matrice céramique renforcée de fibres céramiques, le revêtement comprenant un silicate à dispersion de zircone dans lequel de la zircone stabilisée par de l'oxyde d'ytterbium est précipitée sous forme de phase dispersée dans une phase matricielle qui est l'une quelconque parmi un disilicate de terres rares, un monosilicate de terres rares, et une phase mixte du disilicate de terres rares et du monosilicate de terres rares.

La durée de vie des pièces en matériau composite est liée aux mécanismes d'endommagement des couches protectrices qui peuvent apparaître en fonctionnement.

Il demeure donc souhaitable d'améliorer la résistance des couches de revêtement des matériaux composites pour parvenir à améliorer la durée de vie de ces derniers.

### Exposé de l'invention

L'invention vise précisément à répondre au besoin exposé ci-dessus.

Une solution est apportée en proposant une pièce en matériau composite revêtu comprenant :
- un substrat en matériau composite à matrice céramique ;
- une couche d'accrochage recouvrant le substrat ; et
- un revêtement protecteur présent sur la couche d'accrochage et définissant au moins une barrière environnementale, le revêtement protecteur comprenant au moins un silicate de terre rare et comprenant au moins :
- une première zone externe comprenant une surface externe du revêtement protecteur opposée au substrat et ayant un premier fluage en fonctionnement en présentant une déformation inférieure ou égale à 0,07 % lors de l'application d'une contrainte de compression d'au moins 50 MPa pendant une durée de 10 heures sous une température comprise entre 1050°C et 1300°C, ladite première zone comprenant au moins un agent bloquant la croissance des grains en une teneur suffisante pour obtenir ce premier fluage ; et
- une deuxième zone interne de barrière environnementale, comprenant au moins une interface du revêtement protecteur avec la couche d'accrochage et ayant un deuxième fluage en fonctionnement en présentant une déformation d'au moins 0,01% lors de l'application d'une contrainte de compression d'au moins 50 MPa pendant une durée de 10 heures sous une température comprise entre 900°C et 1000°C.

Les inventeurs sont parvenus à la solution proposée pour répondre au besoin exprimé en analysant en détails les modes d'endommagement des revêtements classiques.

En effet, deux modes d'endommagement peuvent apparaître dans un revêtement d'une pièce en matériau composite.

Le premier mode d'endommagement est la fissuration de surface, aussi appelé faïençage. La fissuration de surface est induite par un gradient thermique occasionnant des contraintes qui sont accommodées par fluage. Le fluage du revêtement est important dans sa partie externe qui est sujette à de grandes variations de température. Ce fluage peut conduire à l'apparition de fissures lors du refroidissement, ce qui diminue les performances de la partie externe.

Le second mode d'endommagement est une fissuration en profondeur localisée dans la barrière environnementale, entre la couche d'accrochage et le revêtement. Cet endommagement est dû à l'oxydation de la couche d'accrochage, qui peut conduire à la croissance d'une couche générant des contraintes locales. Cependant, les inventeurs ont également constaté que le fluage du revêtement à l'endroit où devrait apparaitre ce second mode d'endommagement permet la relaxation de ces contraintes locales. Grâce à ce fluage, la fissuration en profondeur n'est pas observée lorsque le revêtement est placé dans des conditions de fonctionnement.

Ainsi, les inventeurs ont proposé l'ajout d'un agent bloquant la croissance des grains, agent connu en soi dans la littérature, dans la première zone externe pour réduire le fluage de cette zone. Les matériaux classiques de barrière environnementale, comme le disilicate d'ytterbium (Yb₂Si₂O₇), présentent le deuxième fluage décrit plus haut. L'ajout de l'agent bloquant la croissance des grains dans la première zone permet de modifier les valeurs de fluage par rapport à un revêtement classique, et permet d'obtenir le premier fluage de la première zone tout en conservant le deuxième fluage de la deuxième zone. L'invention permet ainsi d'obtenir un revêtement protecteur conférant à la pièce revêtue une durée de vie améliorée, car il adapte les valeurs de fluage de sorte que ce dernier soit spécifiquement présent là où il est bénéfique et maîtrisé là où il n'est pas souhaitable.

Grâce à un tel revêtement, la fissuration de surface est largement réduite car le premier fluage permet d'éviter cette fissuration dans la première zone et la fissuration en profondeur reste inobservée, car le fluage à l'interface entre la couche d'accrochage et le revêtement est conservé grâce à la deuxième zone ayant le deuxième fluage.

La deuxième zone est présente entre la première zone et la couche d'accrochage.

Dans un mode de réalisation, la première zone peut avoir une épaisseur comprise entre 500 µm et 2000 µm.

Cette épaisseur présente un optimal en termes de coût et de performances d'une première zone dans le cas où cette dernière a pour fonction d'être une zone abradable.

Dans un mode de réalisation, le revêtement protecteur ne comprend pas d'autres zones que la couche d'accrochage, la première zone et la deuxième zone décrite ci-dessus.

Néanmoins, on ne sort pas du cadre de l'invention lorsque le revêtement protecteur comprend en outre une zone intermédiaire tampon présente entre les première et deuxième zones, cette zone intermédiaire ayant une composition distincte de celles des première et deuxième zones.

La zone intermédiaire permet le cas échéant de servir de zone tampon pour la diffusion éventuelle de l'agent bloquant la croissance des grains depuis la première zone, permettant de réduire le risque que cet agent ne diffuse jusqu'à la deuxième zone.

Par exemple, la zone intermédiaire peut avoir une épaisseur inférieure ou égale à 300 µm.

Dans un autre mode de réalisation, une telle zone intermédiaire n'est pas nécessaire, et l'épaisseur de la deuxième zone est suffisante pour que la diffusion éventuelle de l'agent bloquant la croissance des grains n'affecte pas le fluage au niveau de l'interface avec la couche d'accrochage.

Dans un mode de réalisation, l'épaisseur de la deuxième zone peut être comprise entre 20 µm et 300 µm.

Cette épaisseur permet d'assurer que le deuxième fluage de la deuxième zone permette une excellente relaxation des contraintes lors de l'oxydation de la couche d'accroche, et elle garantit ainsi l'absence de fissuration en profondeur.

En outre, l'épaisseur de la deuxième zone assure une distance minimale entre la première zone et la couche d'accrochage, de sorte à éviter tout risque, même en l'absence d'une couche intermédiaire, que les agents bloquant la croissance des grains ne diffusent au cours de l'utilisation jusqu'à l'interface avec la couche d'accrochage. Il est en effet important que la diffusion de l'agent bloquant la croissance des grains reste faible à cet endroit. En effet, une diffusion trop importante de l'agent bloquant la croissance des grains vers la deuxième zone pourrait en diminuer le fluage, et donc diminuer les performances du revêtement.

L'agent bloquant la croissance des grains comprend au moins un oxyde de métal de transition des colonnes IV à V. Par exemple, l'agent bloquant la croissance des grains peut comprendre l'un au moins de l'oxyde de zirconium (ZrO₂), l'oxyde de titane (TiO₂), l'oxyde d'hafnium (HfO₂). Dans un mode de réalisation, l'agent bloquant la croissance des grains est l'oxyde de zirconium (ZrO₂).

La teneur massique en agent bloquant la croissance des grains dans la première zone est comprise entre 0,05 % et 10 %.

Une telle teneur permet d'assurer que la première zone ait un fluage diminué grâce à l'agent bloquant la croissance des grains, et permet également d'assurer que la teneur en agent bloquant la croissance des grains soit suffisamment faible pour éviter une trop grande diffusion de ce dernier vers la deuxième zone par exemple et également pour ne pas perturber les autres propriétés souhaitées pour la première zone.

Comme décrit plus haut, une faible quantité de l'agent bloquant la croissance des grains dans la deuxième zone, par exemple celle obtenue par diffusion lors de l'utilisation du revêtement, n'est pas de nature à changer radicalement le comportement en fluage de cette deuxième zone. En particulier, la deuxième zone conserve une valeur conforme au deuxième fluage.

Dans un mode de réalisation, la première zone comprend un silicate de terre rare choisi parmi le disilicate d'ytterbium (Yb₂Si₂O₇), le disilicate d'yttrium (Y₂Si₂O₇), ou un mélange de ces deux composés ((Yb,Y)₂Si₂O₇).

Dans un mode de réalisation, la première zone ne comprend pas d'autre silicate de terre rare que ceux de la liste ci-dessus.

Dans un mode de réalisation, la deuxième zone comprend un silicate de terre rare choisi parmi le disilicate d'ytterbium (Yb₂Si₂O₇), le disilicate d'yttrium (Y₂Si₂O₇), ou un mélange de ces deux composés ((Yb,Y)₂Si₂O₇).

Dans un mode de réalisation, la deuxième zone ne comprend pas d'autre silicate de terre rare que ceux de la liste ci-dessus.

Le cas échéant, la zone intermédiaire, présente entre la première et la deuxième zone peut comprendre un silicate de terre rare choisi parmi le disilicate d'ytterbium (Yb₂Si₂O₇), le disilicate d'yttrium (Y₂Si₂O₇), ou une combinaison de ces deux composés par exemple une combinaison d'au moins une couche de disilicate d'ytterbium et d'au moins une couche de disilicate d'yttrium.

Dans un mode de réalisation, la zone intermédiaire ne comprend pas d'autre silicate de terre rare que ceux de la liste ci-dessus.

Dans un mode de réalisation, la couche d'accrochage peut comprendre du silicium (Si).

La couche d'accrochage a pour effet de favoriser l'adhérence du revêtement protecteur sur le substrat.

Dans un mode de réalisation, la première zone et la deuxième zone peuvent être de natures différentes. Par exemple, le revêtement peut comprendre au moins une première couche définissant la première zone externe et comprenant un premier silicate de terre rare, et une deuxième couche définissant la deuxième zone interne et comprenant un deuxième silicate de terre rare différent du premier silicate de terre rare.

Ce mode de réalisation permet de choisir des compositions de chacune des zones particulièrement adaptées aux fonctions que l'on souhaite obtenir pour la première et la deuxième zone du revêtement protecteur.

Par exemple, la première couche est une couche abradable, et la deuxième couche une barrière environnementale. Indépendamment ou en combinaison, la première couche peut être une barrière thermique et la deuxième couche une barrière environnementale.

La première couche peut comprendre un disilicate d'yttrium (Y₂Si₂O₇) et au moins un agent bloquant la croissance des grains, par exemple de l'oxyde de zirconium (ZrO₂), et la deuxième couche peut comprendre un disilicate d'ytterbium (Yb₂Si₂O₇).

Dans ce mode de réalisation, la pièce peut être un secteur d'anneau de turbine dans lequel la première zone est un abradable. Selon une variante, la pièce peut être une aube de turbomachine avec un sommet abradable.

Quelle que soit la nature des première et deuxième couches, on peut adjoindre une troisième couche, définissant la zone intermédiaire tampon telle que décrite plus haut, entre les première et deuxième couches.

### Brève description des dessins

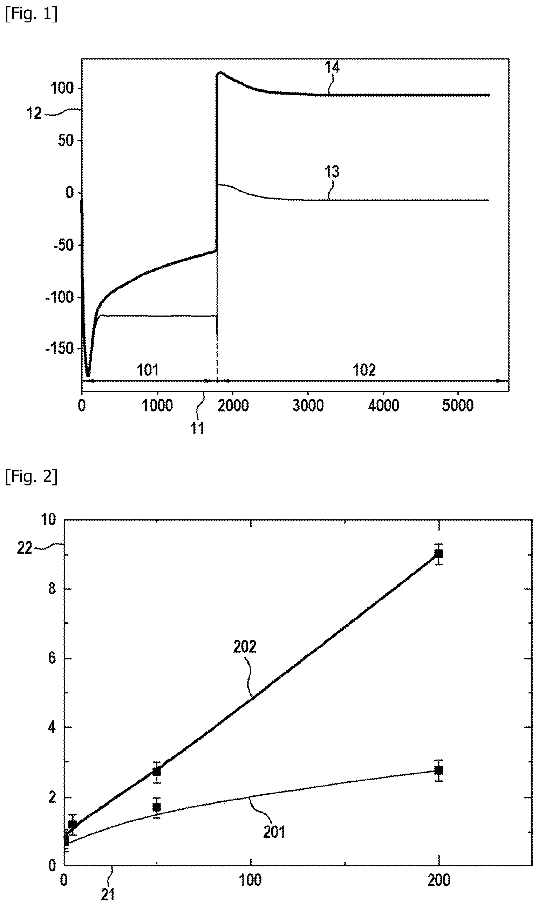

[Fig. 1] La figure 1 représente schématiquement l'évolution de la contrainte, observée au cours d'un cycle de température avec un gradient thermique appliqué sur un composite à matrice céramique revêtu, au point le plus chaud en surface du revêtement pour une première couche d'un revêtement de l'invention et une première couche d'un revêtement hors invention.
[Fig. 2] La figure 2 représente l'évolution de la taille des grains observés sans et avec agent bloquant pour un cycle thermique représentatif du traitement de stabilisation pour un revêtement de l'invention et un revêtement hors invention.

### Description des modes de réalisation

L'invention est à présent décrite au moyen de modes de réalisation particuliers et de figures, qui ne sont présents qu'à des fins illustratives et qui ne doivent pas être interprétés de manière limitative.

Au sens de l'invention, un « silicate de terre rare » doit s'entendre comme un composé comprenant du silicium Si, de l'oxygène O, et une terre rare notée RE. On notera en particulier qu'un monosilicate de terre rare RE de formule générale RE₂SiO₅, et qu'un disilicate de terre rare RE de formule générale RE₂Si₂O₇ entrent tous deux dans la définition retenue pour l'invention d'un silicate de terre rare.

Comme décrit plus haut, les revêtements de l'art antérieur sont conformes au deuxième fluage. S'il n'est pris aucune disposition particulière, les barrières environnementales ou thermiques connues comprenant un ou plusieurs silicate(s) de terre rare sont conformes au deuxième fluage. C'est pourquoi la présence de l'agent bloquant la croissance des grains est importante pour permettre l'obtention d'une zone présentant le premier fluage.

Au sens de l'invention, le fluage a sa définition habituelle du métier, à savoir la déformation que peut connaître un matériau soumis, de manière prolongée à une contrainte ou un gradient de contraintes. Ainsi, le fluage s'exprime comme une déformation donnée en fonction de la sollicitation, du temps et de la température appliqués.

D'une manière générale, la première zone avec le premier fluage comprend un premier silicate de terre rare et l'agent bloquant la croissance des grains, et la deuxième zone avec un deuxième fluage comprend un deuxième silicate de terre rare identique ou différent du premier silicate de terre rare.

Il est à présent fait référence aux figures 1 et 2.

Ces figures illustrent les différences de comportement pour un revêtement selon l'invention et un revêtement hors invention. Les mesures présentées sur ces figures sont obtenues à partir d'un revêtement protecteur selon l'invention et d'un revêtement protecteur de l'art antérieur dont les compositions sont similaires à la présence de l'agent bloquant la croissance des grains près dans la couche externe.

Pour les mesures des figures 1 et 2, la pièce revêtue selon l'invention comprend les couches suivantes :
- un substrat en matériau composite à matrice céramique ;
- une couche d'accrochage de silicium (Si) ;
- une couche définissant la barrière environnementale comprenant du disilicate d'ytterbium (Yb₂Si₂O₇); et
- une couche abradable définissant la première zone et comprenant du disilicate d'yttrium (Y₂Si₂O₇) et une teneur massique de 1% d'oxyde de zirconium (ZrO₂) à titre d'agent bloquant la croissance des grains.

La pièce revêtue hors invention comprend les mêmes couches définissant les mêmes zones, mais pas d'agent bloquant la croissance des grains dans sa première couche abradable.

Dans le mode de réalisation de ces exemples, on notera que la première (et respectivement deuxième) couche définit la première (et respectivement deuxième) zone. Il est rappelé que cela n'est qu'un mode de réalisation descriptif et qu'il n'est pas exclu que couches ne définissent pas exactement les zones.

La figure 1 illustre l'évolution de la contrainte, observée au cours d'un cycle de température avec gradient thermique appliqué sur un matériau composite à matrice céramique revêtu, au point le plus chaud en surface du revêtement pour une première couche d'un revêtement de l'invention et une première couche d'un revêtement hors invention.

La figure 1 montre l'évolution de la contrainte 12 dans la couche, exprimée en MPa, en fonction du temps 11, exprimé en secondes.

L'évolution de la contrainte dans chacune des premières couches est évaluée au cours d'un cycle de chauffage puis refroidissement. Le chauffage n'est pas homogène et crée un gradient thermique dans le revêtement. Pendant la durée 101, le revêtement est chauffé jusqu'à 1300°C, puis le revêtement est laissé à l'air pour se refroidir pendant la durée 102.

Les courbes 13, 14 sur la figure 1 illustrent qu'une pièce avec une première couche selon l'invention 13 ou hors invention 14 présentent, lors de la mise en température 101, des contraintes de compression les contraintes étant négatives.

Il est toutefois remarquable que lors du refroidissement 102, une première couche selon l'invention 13 ne présente pas de contrainte importante en traction. A l'inverse, une première couche hors invention 14 présente une contrainte en traction importante.

Il apparait à la lecture de la figure 1 qu'une première couche selon l'invention 13 permet d'éviter des contraintes trop importantes en traction permettant ainsi d'éviter la fissuration de surface d'un revêtement.

En effet, dans le revêtement hors invention 14, le fluage permet d'accommoder les contraintes de compression créées lors du chauffage ce qui se manifeste sur la courbe 14 par la diminution en valeur absolue de la contrainte de compression apparaissant lors du chauffage 101. La première couche hors invention se retrouve alors en traction lors du refroidissement 102, or elle ne peut plus accommoder par fluage cette contrainte de traction car la température est alors trop faible et l'on observe en conséquence un faïençage de la couche hors invention.

Au contraire, une couche selon l'invention 13 ne flue pas lors du chauffage 101, et il est visible sur la figure 1 qu'effectivement la contrainte ne diminue pas. Puisque la couche selon l'invention n'a pas flué, le refroidissement 102 lui permet de retourner à un état de contrainte proche de l'état initial sans passer par un état de contrainte en traction trop important.

La figure 2 représente l'évolution de la taille moyenne des grains 22, exprimée en µm, dans les premières couches des deux pièces, l'une selon l'invention, l'autre hors invention, au cours d'un frittage à 1400°C, dont la durée 21 est exprimée en heures. Ce traitement est représentatif du traitement de stabilisation appliqué pour former la première couche.

La figure 2 représente l'évolution de la taille de grain observée, pour un revêtement de l'invention et un revêtement hors invention, au cours d'un cycle thermique représentatif d'un traitement de stabilisation du revêtement. Elle illustre que la présence de l'agent bloquant la croissance des grains dans une première couche d'un revêtement selon l'invention, courbe 201, permet d'empêcher la croissance de la taille des grains, ce qui limite alors le fluage dans une première zone selon l'invention. En revanche dans une première zone d'un revêtement hors invention, courbe 202, la taille de grain évolue linéairement avec la durée du traitement de stabilisation ce qui est associé à un important fluage.

Dans un mode de réalisation, l'agent bloquant est présent sous forme de précipités, localisés aux joints de grains, et dont la taille moyenne peut être comprise entre 100 nm et 1 µm.

Dans un mode de réalisation particulier, la première zone peut comprendre du disilicate d'yttrium (Y₂Si₂O₇) et de l'oxyde de zirconium (ZrO₂) comme agent bloquant la croissance des grains. Par exemple, la teneur massique en disilicate d'yttrium (Y₂Si₂O₇) est supérieure ou égale à 90 %, par exemple comprise entre 90% et 99,95%, et la teneur massique en oxyde de zirconium (ZrO₂) comprise entre 0,05 % et 10 %.

Dans un autre mode de réalisation particulier, la première zone peut comprendre du disilicate d'yttrium (Y₂Si₂O₇) et de l'oxyde d'hafnium (HfO₂) comme agent bloquant la croissance des grains. Par exemple, la teneur massique en disilicate d'yttrium (Y₂Si₂O₇) est supérieure ou égale à 90 %, par exemple comprise entre 90% et 99,95%, et la teneur massique en oxyde d'hafnium (HfO₂) est comprise entre 0,05 % et 10 %.

Dans un autre mode de réalisation particulier, la première zone peut comprendre du disilicate d'yttrium (Y₂Si₂O₇) et de l'oxyde de titane (TiO₂) comme agent bloquant la croissance des grains. Par exemple, la teneur massique en disilicate d'yttrium (Y₂Si₂O₇) est supérieure ou égale à 90 %, par exemple comprise entre 90% et 99,95%, et la teneur massique en oxyde de titane (TiO₂) est comprise entre 0,05 % et 10 %.

Dans un mode de réalisation, la deuxième zone peut comprendre du disilicate d'ytterbium (Yb₂Si₂O₇), par exemple dans une teneur massique en disilicate d'ytterbium (Yb₂Si₂O₇) supérieure ou égale à 90 %.

Par exemple, un revêtement protecteur tel qu'il vient d'être décrit peut être obtenu par une méthode connue en soi de projection thermique d'un mélange de poudre et frittage. Dans le mode de réalisation décrit, il est à nouveau envisagé qu'une unique couche du revêtement définisse une zone.

Dans un mode de réalisation, la composition de la poudre utilisée dans une méthode de projection thermique de poudre pour la création de la deuxième zone peut être une poudre de disilicate d'ytterbium (Yb₂Si₂O₇). Dans un mode de réalisation alternatif, la poudre projetée thermiquement peut comprendre une poudre d'ytterbium (Yb) et une poudre de silice (SiO₂), dans des proportions qui permettront après frittage d'obtenir du disilicate d'ytterbium (Yb₂Si₂O₇).

Dans un mode de réalisation, la composition de la poudre utilisée dans une méthode de projection thermique de poudre pour la création de la première zone peut être une poudre de disilicate d'yttrium (Y₂Si₂O₇) et une poudre d'un agent bloquant la croissance des grains, par exemple une poudre d'oxyde de zirconium (ZrO₂). Dans un mode de réalisation alternatif, la poudre projetée thermiquement peut comprendre une poudre de silice (SiO₂) et une poudre d'yttrium (Y), dans des proportions permettant l'obtention après frittage d'une couche de disilicate d'yttrium (Y₂Si₂O₇), et une poudre d'un agent bloquant la croissance des grains, par exemple une poudre d'oxyde de zirconium (ZrO₂).

Bien entendu, la poudre d'agent bloquant la croissance des grains est choisie de telle sorte que la quantité obtenue d'agent bloquant la croissance des grains soit adaptée à produire la limitation du fluage souhaitée.

Une fois la ou les poudres déposées à la surface de la pièce en matériau composite, le revêtement peut être obtenu par frittage.

De manière alternative, le revêtement protecteur peut être obtenu par dépôt de poudres sous forme de barbotines et frittage. Le revêtement protecteur peut encore être obtenu par torche plasma ou par voie liquide, par exemple par électrophorèse ou par enduction par trempage. Le revêtement peut également être obtenu par dépôt chimique en phase vapeur.

## Revendications

1. Pièce en matériau composite revêtue comprenant :
- un substrat en matériau composite à matrice céramique ;
- une couche d'accrochage recouvrant le substrat ; et
- un revêtement protecteur présent sur la couche d'accrochage et définissant au moins une barrière environnementale, le revêtement protecteur comprenant au moins un silicate de terre rare et comprenant au moins :
- une première zone externe comprenant une surface externe du revêtement protecteur opposée au substrat et ayant un premier fluage en fonctionnement en présentant une déformation inférieure ou égale à 0,07% lors de l'application d'une contrainte de compression d'au moins 50 MPa pendant une durée de 10 heures sous une température comprise entre 1050°C et 1300°C, ladite première zone comprenant au moins un agent bloquant la croissance des grains en une teneur suffisante pour obtenir ce premier fluage ; et
- une deuxième zone interne de barrière environnementale, comprenant au moins une interface du revêtement protecteur avec la couche d'accrochage et ayant un deuxième fluage en fonctionnement en présentant une déformation d'au moins 0,01 % lors de l'application d'une contrainte de compression d'au moins 50 MPa pendant une durée de 10 heures sous une température comprise entre 900°C et 1000°C,
dans laquelle l'agent bloquant la croissance des grains comprend un oxyde de métal de transition des colonnes IV à V et dans laquelle la teneur massique en agent bloquant la croissance des grains dans la première zone est comprise entre 0,05 % et 10 %.

2. Pièce selon la revendication 1, dans laquelle l'épaisseur de la deuxième zone peut être comprise entre 20 µm et 300 µm.

3. Pièce selon la revendication 1 ou 2, dans laquelle l'agent bloquant la croissance des grains comprend l'un au moins de l'oxyde de zirconium (ZrO₂), l'oxyde de titane (TiO₂), l'oxyde d'hafnium (HfO₂).

4. Pièce selon l'une quelconque des revendications 1 à 3, dans laquelle la couche d'accrochage comprend du silicium (Si).

5. Pièce selon la revendication 1 à 4, dans laquelle le revêtement protecteur comprend au moins une première couche définissant la première zone externe et comprenant un premier silicate de terre rare, et une deuxième couche définissant la deuxième zone interne et comprenant un deuxième silicate de terre rare différent du premier silicate de terre rare.

6. Pièce selon la revendication 5, dans laquelle la première couche est une couche abradable et la deuxième couche une barrière environnementale.

7. Pièce selon la revendication 6, dans laquelle la première couche comprend un disilicate d'yttrium (Y₂Si₂O₇) et ledit au moins un agent bloquant la croissance des grains, et la deuxième couche comprend un disilicate d'ytterbium (Yb₂Si₂O₇).

8. Pièce selon l'une quelconque des revendications 1 à 7, dans laquelle le revêtement protecteur comprend en outre une zone intermédiaire tampon présente entre les première et deuxième zones, cette zone intermédiaire ayant une composition distincte de celles des première et deuxième zones.

9. Pièce selon l'une quelconque des revendications 1 à 8, dans laquelle ladite pièce est un secteur d'anneau de turbine et dans lequel la première zone est un abradable.

## Patentansprüche

1. Teil aus beschichtetem Verbundwerkstoff, umfassend:
- ein Substrat aus Verbundwerkstoff mit Keramikmatrix;
- eine Haftschicht, die das Substrat bedeckt; und
- eine Schutzbeschichtung, die auf der Haftschicht vorhanden ist und mindestens eine Umgebungsbarriere definiert, die Schutzbeschichtung umfassend mindestens ein Seltenerdsilikat und mindestens umfassend:
- einen ersten äußeren Bereich, umfassend eine äußere Oberfläche der Schutzbeschichtung gegenüber dem Substrat und der im Betrieb ein erstes Kriechen aufweist, indem er eine Verformung von weniger als oder gleich wie 0,07 % aufweist, wenn über eine Dauer von 10 Stunden bei einer Temperatur zwischen 1050 °C und 1300 °C eine Druckspannung von mindestens 50 MPa angewendet wird, der erste Bereich umfassend mindestens ein Mittel zum Blockieren des Kornwachstums in einer Menge, die ausreichend ist, um dieses erste Kriechen zu erlangen; und
- einen zweiten inneren Bereich der Umgebungsbarriere, der mindestens eine Grenzfläche der Schutzbeschichtung mit der Haftschicht umfasst und im Betrieb ein zweites Kriechen aufweist, indem er eine Verformung von mindestens 0,01 % aufweist, wenn über eine Dauer von 10 Stunden bei einer Temperatur zwischen 900 °C und 1000 °C eine Druckspannung von mindestens 50 MPa angewendet wird,
wobei das Mittel zum Blockieren des Kornwachstums ein Oxid eines Übergangsmetalls der Spalten IV bis V umfasst und wobei der Massengehalt des Mittels zum Blockieren des Kornwachstums in dem ersten Bereich zwischen 0,05 % und 10 % liegt.

2. Teil nach Anspruch 1, wobei die Stärke des zweiten Bereichs zwischen 20 µm und 300 µm liegen kann.

3. Teil nach Anspruch 1 oder 2, wobei das Mittel zum Blockieren des Kornwachstums mindestens eines von Zirkoniumoxid (ZrO₂), Titanoxid (TiO₂), Hafniumoxid (HfO₂) umfasst.

4. Teil nach einem der Ansprüche 1 bis 3, wobei die Haftschicht Silizium (Si) umfasst.

5. Teil nach Anspruch 1 bis 4, wobei die Schutzbeschichtung mindestens eine erste Schicht, die den ersten äußeren Bereich definiert und ein erstes Seltenerdsilikat umfasst, und eine zweite Schicht, die den zweiten inneren Bereich definiert und ein zweites Seltenerdsilikat umfasst, das sich von dem ersten Seltenerdsilikat unterscheidet, umfasst.

6. Teil nach Anspruch 5, wobei die erste Schicht eine abradierbare Schicht und die zweite Schicht eine Umgebungsbarriere ist.

7. Teil nach Anspruch 6, wobei die erste Schicht ein Yttriumdisilikat (Y₂Si₂O₇) und das mindestens eine Mittel zum Blockieren des Kornwachstums umfasst und die zweite Schicht ein Ytterbiumdisilikat (Yb₂Si₂O₇) umfasst.

8. Teil nach einem der Ansprüche 1 bis 7, wobei die Schutzbeschichtung ferner eine zwischen der ersten und der zweiten Zone vorhandene Puffer-Zwischenzone umfasst, wobei diese Zwischenzone eine von der ersten und der zweiten Zone verschiedene Zusammensetzung aufweist.

9. Teil nach einem der Ansprüche 1 bis 8, wobei das Teil ein Turbinenringsektor ist und wobei der erste Bereich ein abradierbarer ist.

## Claims

1. A part made of coated composite material comprising:
- a substrate made of ceramic matrix composite material;
- a tie-coat layer covering the substrate; and
- a protective coating that is on the tie-coat layer and that defines at least one environmental barrier, the protective coating comprising at least one rare-earth silicate and comprising at least:
- a first outer region comprising an outer surface of the protective coating opposite to the substrate and having a first working creep, having deformation of less than or equal to 0.07% when a compressive stress of at least 50 MPa is applied for a duration of 10 hours at a temperature of between 1050°C and 1300°C, said first region comprising at least one grain growth inhibitor in a sufficient quantity to obtain this first creep; and
- a second, inner, environmental barrier region, comprising at least one interface of the protective coating with the tie-coat layer and having a second working creep, having deformation of at least 0.01% when a compressive stress of at least 50 MPa is applied for a duration of 10 hours at a temperature of between 900°C and 1000°C,
wherein the grain growth inhibitor comprises a group IV to V transition metal oxide and wherein the content by mass of grain growth inhibitor in the first region is between 0.05% and 10%.

2. The part according to claim 1, wherein the thickness of the second region can be between 20 µm and 300 µm.

3. The part according to claim 1 or 2, wherein the grain growth inhibitor comprises at least one of zirconium oxide (ZrO₂), titanium oxide (TiO₂) and hafnium oxide (HfO₂).

4. The part according to any one of claims 1 to 3, wherein the tie-coat layer comprises silicon (Si).

5. The part according to claim 1 to 4, wherein the protective coating comprises at least a first layer defining the first outer region and comprising a first rare earth silicate, and a second layer defining the second, inner, region and comprising a second rare earth silicate different from the first rare earth silicate.

6. The part according to claim 5, wherein the first layer is an abradable layer and the second layer an environmental barrier.

7. The part according to claim 6, wherein the first layer comprises an yttrium disilicate (Y₂Si₂O₇) and said at least one grain growth inhibitor, and the second layer comprises an ytterbium disilicate (Yb₂Si₂O₇).

8. The part according to any one of claims 1 to 7, wherein the protective coating further comprises an intermediate buffer region present between the first and second regions, this intermediate region having a composition distinct from those of the first and second regions.

9. The part according to any one of claims 1 to 8, wherein said part is a turbine ring sector and wherein the first region is abradable.
